(19) Europäisches Patentamt
European Patent Office
Office européen des brevets

(11) **EP 2 557 537 B1**

(12) **EUROPEAN PATENT SPECIFICATION**

(45) Date of publication and mention
of the grant of the patent:
**25.06.2014 Bulletin 2014/26**

(51) Int Cl.:
*G06T 5/00* *(2006.01)*       *G06T 5/40* *(2006.01)*
*G06T 7/40* *(2006.01)*       *H04N 13/00* *(2006.01)*

(21) Application number: **11189515.7**

(22) Date of filing: **17.11.2011**

(54) **Method and image processing device for processing disparity**

Verfahren und Bildverarbeitungsvorrichtung zur Verarbeitung von Disparität

Procédé et dispositif de traitement d'images pour traiter les disparités

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2011 TR 201107846**

(43) Date of publication of application:
**13.02.2013 Bulletin 2013/07**

(73) Proprietor: **Vestel Elektronik Sanayi ve Ticaret A.S.
45030 Manisa (TR)**

(72) Inventor: **Cigla, Cevahir
Ankara (TR)**

(74) Representative: **Viering, Jentschura & Partner
Patent- und Rechtsanwälte
Am Brauhaus 8
01099 Dresden (DE)**

(56) References cited:
**EP-A1- 2 293 586          EP-A2- 1 968 329
US-A1- 2008 240 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

Various embodiments relate generally to image processing. Furthermore, various embodiments relate to a method and an image processing device for processing disparity.

**Background**

With the development and success of three-dimensional (3D) technologies, its application is not limited to 3D movies in theaters, but is extending to home electronics, such as 3D TVs and other 3D consumer products. 3D vision or stereoscopic vision may be created by presenting two slightly different sets of images to a viewer, wherein one set includes left eye images corresponding to a left eye viewpoint and the other set includes right eye images corresponding to a right eye viewpoint. 3D displays (e.g., CRT, LCD, Plasma, etc.) show left eye and right eye views on the same surface, and by temporal or spatial multiplexing, make the left eye of a viewer only see the left eye view and the right eye only see the right-eye view. Disparities between the two views provide a vision with depth perception to the viewer, and make the viewer perceive a stereoscopic view.

In order to provide smoother disparity estimates, several post-processing operations, e.g., involving median filtering or bilateral filtering, may be performed over disparity maps. In some approaches, depending on the local color distribution, adaptive support regions are utilized to filter disparity data by color similarities. Thus, similar disparity values are assigned to the regions having similar color. These approaches preserve object boundaries and enable crisp disparity maps for high quality processing, but may require large support regions which may increase the computational complexity.

In the above approaches exploiting color matching and spatial smoothness between neighboring pixels, disparities for un-textured surfaces may not be processed correctly due to lack of information at uniform surface. The similar color distribution in the un-textured regions provides multiple matching candidates among a plurality of disparity value candidates, which makes it difficult to estimate true disparity values for these regions. Moreover, in large uniform surfaces which are partially divided, the uniformity of the estimated disparity map may not be preserved, which may result in consistency problems for some applications such as depth based enhancement and arbitrary view synthesis. By way of example, disparity estimation for disconnected regions belonging to the same surface or object, such as the partially occluded sky in an image, may be erroneous due to the homogenous color distribution in these low-textured or un-textured regions. The local smoothing approaches may smooth each partial region and the error in the estimated disparity map may progress.

EP 2 293 586 A1 discloses a method for processing stereoscopic images. According to EP 2 293 586 A1, an initial map of disparity/depth of stereo images from 3D video is computed. Furthermore, a depth map is smoothed and depth perception is changed according to the estimation of the eye fatigue. Finally, new stereo image is generated according to the depth perception parameters.

EP 1 968 329 A2 discloses an apparatus and method which includes estimating the disparity between two stereoscopic input images, and computing an adjustment to the estimated disparity using a histogram mapping technique.

**Summary**

An object of the invention is to improve the estimated disparities for low-textured or un-textured regions having homogenous color distribution.

Various embodiments provide a method for processing a disparity value, an image processing device and an imaging device.

Various embodiments provide a method for processing a disparity value for an image element in a first image with respect to a second image. The method may include determining an intensity disparity histogram, which includes, for each intensity value of a plurality of intensity values and each disparity value of a plurality of disparity values, a frequency value indicating the number of image elements having the respective intensity value and the same disparity value; selecting a tuple of a frequency value and an associated disparity value, for which the frequency value fulfils a predefined criterion; determining a first weighting factor dependent on the frequency value of the selected tuple; determining a texture value for the image element, the texture value representing an intensity value variation over a neighboring region of the image element in the first image; determining a second weighting factor dependent on the texture value of the image element; and determining an amended disparity value for the image element dependent on the disparity value for the image element and the first weighting factor, the second weighting factor, and the disparity value of the selected tuple.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:

Fig. 1 shows a system according to an embodiment.
Fig. 2 shows a schematic diagram of an image processing device according to an embodiment.
Fig. 3 shows a flow diagram according to an embodiment.
Fig. 4 illustrates a first weighting factor according to an embodiment.
Fig. 5 shows a horizontal filter and a vertical filter according to an embodiment.
Fig. 6 shows a boxer filter applied to an texture map according to an embodiment.
Fig. 7 illustrates a second weighting factor according to an embodiment.
Fig. 8 shows an imaging system according to an embodiment.

## Detailed Description

Various embodiments provide a method and a device for processing disparity values, taking both global characteristics and local characteristics of the image into consideration. Embodiments provide more accurate disparity values for un-textured regions in the image.

Various embodiments are directed to a method for processing a disparity value for an image element in a first image with respect to a second image. The method may include determining an intensity disparity histogram, which includes, for each intensity value of a plurality of intensity values and each disparity value of a plurality of disparity values, a frequency value indicating the number of image elements having the respective intensity value and the same disparity value; selecting a tuple of a frequency value and an associated disparity value, for which the frequency value fulfils a predefined criterion; determining a first weighting factor dependent on the frequency value of the selected tuple; determining a texture value for the image element, the texture value representing an intensity value variation over a neighboring region of the image element in the first image; determining a second weighting factor dependent on the texture value of the image element; and determining an amended disparity value for the image element dependent on the disparity value for the image element and the first weighting factor, the second weighting factor, and the disparity value of the selected tuple.

The first image may be a left eye view image, e.g. captured by a camera at the left eye position. The second image may be a right eye view image, e.g. captured by a camera at the right eye position. The first image and the second image may form a stereo image pair.

The disparity value for the image element in the first image may be determined based on stereoscopic correspondence, such as a blocking matching algorithm or a global energy minimization algorithm. A disparity value may be determined for each image element in the first image with respect to the second image, and the determined disparity values may form a disparity map. For example, a correspondence search may be performed to find a second image element in the second image corresponding to a first image element in the first image using a matching block or window surrounding the image elements. The similarity between the image elements may be measured by a cost function calculated, e.g., based on sum of squared difference, sum of absolute difference or normalized correlation, etc.. The image element in the second image which gives the minimum value of the cost function indicates a best match with the first image element in the first image and may be determined to be the corresponding second image element. Accordingly, the disparity between these corresponding image elements may be estimated as the disparity of the first or the second image element.

In an embodiment, selecting the tuple of the frequency value and the associated disparity value may include selecting the maximum frequency value from the plurality of frequency values determined for an intensity value of the image element in the first image, and selecting the disparity value associated with the maximum frequency value. The selected disparity value associated with the maximum frequency value may be referred to as the dominant disparity value for the intensity value of the image element. The selected maximum frequency value may represent the number of image elements, i.e. the area or size of the first image, having the same intensity value with the image element and having the dominant disparity value, and may be referred to as the dominant frequency value in this context.

The first weighting factor may be determined using the frequency value of the selected tuple. In an embodiment, the first weighting factor is determined in accordance with the following equation:

$$Global\_Weight_{I(x,y)} = \begin{cases} 1 & if \quad DDF(I_{(x,y)}) > F\_thres \\ DDF(I_{(x,y)}) / F\_thres & elsewhere \end{cases}$$

wherein

$Global\_Weight_{I(x,y)}$ represents the first weighting factor;
$I(x,y)$ represents the intensity value of the image element;
$DDF(I_{(x,y)})$ represents the frequency value of the selected tuple; and
$F\_thres$ represents the predetermined threshold.

In an embodiment, the predetermined threshold is determined based on a percentage of the size of the first image. For example, if the frequency value of the selected tuple is larger than the predetermined threshold, i.e., the number of image elements having the same intensity value with the image element is big enough, which means the image element may belong to a textureless or non-textured region with the same intensity value, the first weighting factor for the image element is determined to be high, e.g., to be 1. In other words, if the image element is belong to a un-textured region, a high weighting factor is assigned. On the hand, if the frequency value of the selected tuple is not larger than the predetermined threshold, which means the image element may belong to a textured region, the first weighting factor for the image element is determined to be lower than 1, e.g., to be proportional to the frequency value of the selected tuple.

It is to be noted that any other suitable function to determine the first weighting factor may be used in alternative embodiments.

In accordance with the above description, the dominant frequency value of the selected tuple is determined based on the intensity disparity histogram calculated using all image elements of the first image, the dominant frequency value and the first weighting factor determined thereupon may represent a global characteristic of the image element in the first image. Accordingly, the first weighting factor may also be referred to as a global weighting factor.

In an embodiment, the texture value for the image element may be determined by applying a horizontal filter and a vertical filter to the image element. The horizontal filter and the vertical filter may be a 2x2 filter, a 3×3 filter, ...or a NxN filter. The horizontal filter may determine the intensity value variance along a horizontal axis in the first image, which means that the intensity values to the left and to the right of the image element are taken into consideration. The vertical filter may determine the intensity variance along a vertical axis in the first image, which means that the intensity values to above and below the image element are taken into consideration. The horizontal filter and the vertical filter together provide the information of the intensity value variance over a neighboring region of the image element in the first image. A higher intensity value variance may indicate that the image element is positioned in or near a textured region, while a lower intensity value variance may indicated that the image element is positioned in a un-textured region having uniform intensity values.

In an illustrative embodiment, the horizontal filter and the vertical filter may be a 3x3 filter, and the output of the respective filters may be determined in accordance with the following equations:

$$hor(x,y) = -I(x-1,y-1) - I(x-1,y) - I(x-1,y+1) \\ + I(x+1,y-1) + I(x+1,y) + I(x+1,y+1)$$

$$ver(x,y) = -I(x-1,y-1) - I(x,y-1) - I(x+1,y-1) \\ + I(x-1,y+1) + I(x,y+1) + I(x+1,y+1)$$

Wherein

$hor(x, y)$ represents the horizontal filter;
$ver(x, y)$ represents the vertical filter;

*I*(*x, y*) represents the intensity value of the image element at (x, y).

In an embodiment, the texture value for the image element in the first image may be determined in accordance with the following equation:

$$Texture(x, y) = \sqrt{hor(x, y).ver(x, y)}$$

wherein *Texture*(*x, y*) represents the texture value of the image element at (x, y).

The texture value determined for the image element in accordance with the above embodiment is high when the intensity value variation along both horizontal and vertical axes is high. Illustratively, a higher texture value indicates that the image element is located in or near a textured region, and vice versa.

In accordance with the above description, the texture value is determined locally within a N×N window surrounding the image element, and therefore may represents a local characteristic of the image element.

The texture value determined in the above embodiments may be smoothed using a filter, e.g. a box blur filter, a Gaussian smoothing filter, or a median filter, etc. in order to decrease the effect of noise.

According to an embodiment, the second weighting factor may be determined based on the texture value. A sufficiently high texture value may indicate that the image element is located in or near a textured region, and the second weighting factor is determined to be 0. A low texture value may on the other hand indicate that the image element is located in a un-textured region, and the second weighting factor is determined to be high, e.g., to be inversely proportional to the texture value.

In an embodiment, the second weighting factor may be determined in accordance with the following equation:

$$Local(x, y) = \begin{cases} 0 & if \quad Texture(x, y) > T\_thres \\ \dfrac{1}{Texture(x, y) + c} & elsewhere \end{cases}$$

wherein

*Local(x,y)* represents the second weighting factor determined for the image element *(x,y)*;
*Texture*(*x, y*) represents the texture value;
*c* represents a constant close to 0; and
*T_thres* represents a predefined threshold.

In accordance with the above description, the texture value may represent a local characteristic of the image element. Therefore, the second weighting factor determined thereupon may also be referred to as a local weighting factor.

Having determined the first weighting factor and the second weighting factor, the amended disparity may be determined accordingly.

In an embodiment, the amended disparity value is determined to converge to the disparity value of the selected tuple, if the first weighting factor and the second weighting factor are close to 1. Illustratively, the higher first weighting factor and second weighting factor indicate that the image element is in or near a un-textured region, and therefore the amended disparity value is determined to be or to be close to the disparity value of the selected tuple, such that the disparity value same as or similar to the dominant disparity value is assigned to image elements in or near the un-textured region.

In an embodiment, the amended disparity value is determined to be equal to or close to the disparity value of the image element, if either of the first weighting factor and the second weighting factor is equal to or close to 0. Illustratively, the lower first weighting factor or the lower second weighting factor may indicate that the image element is in or near a textured region, and therefore, the disparity value of the image element may be maintained.

According to an embodiment, the amended disparity value for the image element may be determined in accordance with the following equation:

$$D_{(x,y)}' = \left|1 - Weight_{(x,y)}\right| * D_{(x,y)} + Weight_{(x,y)} * DDC(I_{(x,y)})$$

wherein

$$Weight(x,y) = Global\_Weight_{I(x,y)} * Local(x,y)$$

wherein

$Global\_Weight_{I(x,y)}$ represents the first weighting factor;
$Local(x,y)$ represents the second weighting factor;
$I(x,y)$ represents the intensity value of the image element;
$DDC(I_{(x,y)})$ represents the associated disparity value of the selected tuple; and
$D_{(x,y)}$ represents the disparity value of the image element;
$D_{(x,y)}'$ represents the amended disparity value of the image element.

In one embodiment, the image element described in the context of this description may include a picture element, also referred to as a pixel. In another embodiment, the image element described in the context of this description may include a plurality of picture elements, such as a block of picture elements or any object including a plurality of picture elements. The disparity value, the selected tuple, the first weighting factor, the texture value, the second weighting factor, and the amended disparity value may be determined for each pixel or each block of pixels accordingly. The intensity disparity histogram may be determined for each pixel in the first image or the second image. The intensity disparity histogram may also be determined for each block of pixels, wherein the intensity value of each block of pixels may be taken as an average intensity value of the block.

The first image and the second image may be grayscale images in an embodiment. In another embodiment, the first image and the second image may be color images. The above embodiments described in relation to the intensity value is analogously valid for the RGB values of color images. Similarly, the color images may be represented using other color models, such as CMYK (cyan, magenta, yellow and key) and the various embodiments may be applied accordingly.

In an embodiment wherein the first image and the second image are color images, a red color disparity histogram, a green color disparity histogram and a blue color disparity histogram may be determined respectively (in case of a CMYK color space being used, e.g. a cyan color disparity histogram, a magenta color disparity histogram and a yellow color disparity histogram may be determined). Accordingly, selecting the tuple may include selecting a tuple for each color. For example, a first tuple may be selected for the red color disparity histogram, a second tuple may be selected for the green color disparity histogram, and a third tuple may be selected for the blue color disparity histogram. A respective weighting factor may be determined dependent on the respective frequency value of the first tuple, the second tuple and the third tuple, and the three weighting factors may be averaged, e.g. using a geometric mean or an arithmetic mean or any other suitable averaging method, to obtain the first weighting factor for the image element.

Another embodiment is directed to an image processing device for processing a disparity value for an image element in a first image with respect to a second image. The device may include an intensity disparity histogram determination circuit configured to determine, for each intensity value of a plurality of intensity values and each disparity value of a plurality of disparity values, a frequency value indicating the number of image elements having the respective intensity value and the same disparity value. The device may also include a selection circuit configured to select a tuple of a frequency value and an associated disparity value, for which the frequency value fulfils a predefined criterion; a first weighting factor determination circuit configured to determine a first weighting factor dependent on the frequency value of the selected tuple; and a texture value determination circuit configured to determine a texture value for the image element, wherein the texture value represents an intensity value variation over a neighboring region of the image element in the first image. The device may further include a second weighting factor determination circuit configured to determine a second weighting factor dependent on the texture value of the image element; and an amended disparity value determination circuit configured to determine an amended disparity value for the image element dependent on the disparity value for the image element and the first weighting factor, the second weighting factor, and the disparity value of the selected tuple.

In an embodiment, the selection circuit may be configured to select the maximum frequency value from the plurality of frequency values determined for an intensity value of the image element in the first image, and select the disparity value associated with the maximum frequency value.

Embodiments described below in the context of the method for processing a disparity value for an image element are analogously valid for the image processing device, and vice versa.

The various circuit, such as the intensity disparity histogram determination circuit, the selection circuit, the first weighting factor determination circuit, the texture value determination circuit, the second weighting factor determination circuit, and the amended determination circuit may each be configured to carry out the functions described in the method of various embodiments above.

In an embodiment, the various "circuit" comprised in the image processing device may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions described in the embodiments in this description may also be understood as a "circuit" in accordance with an alternative embodiment.

In an embodiment, the image processing device may be a circuit described above configured to perform the method for processing the disparity value for the image element of the first image with respect to the second image.

In another embodiment, a computer readable medium having a program stored thereon may be provided, wherein the program is to make a computer execute a method described in the above embodiments. The computer readable medium may include any data storage device, such as read-only memory (ROM), random-access memory (RAM), CD-ROMs, magnetic tapes, floppy disks and optical data storage devices.

A further embodiment is directed to an imaging system. The imaging system may include a disparity estimator for estimating a disparity value for each image element in a first image with respect to a second image; an image processing device for amending the disparity value for each image element in accordance with the above embodiments; and an image render for rendering the first image and the second image dependent on the amended disparity values.

The disparity estimator may be configured to estimate the disparity value based on stereoscopic correspondence, such as a blocking matching algorithm or a global energy minimization algorithm.

In an embodiment, the imaging system may further include a 3D content creator configured to generate 3D images or 3D video. Examples of the 3D content creator may include two cameras configured to capture images or video from different perspective, a stereo camera, and a 3D camcorder.

In a further embodiment, the imaging system may include an encoder and/or a decoder configured to encode and decode the 3D content, respectively.

In this context, the image processing device and the imaging system as described in this description may each include a memory which is for example used in the processing carried out by the image processing device and the imaging device. A memory used in the embodiments may be a volatile memory, for example a DRAM (Dynamic Random Access Memory), or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

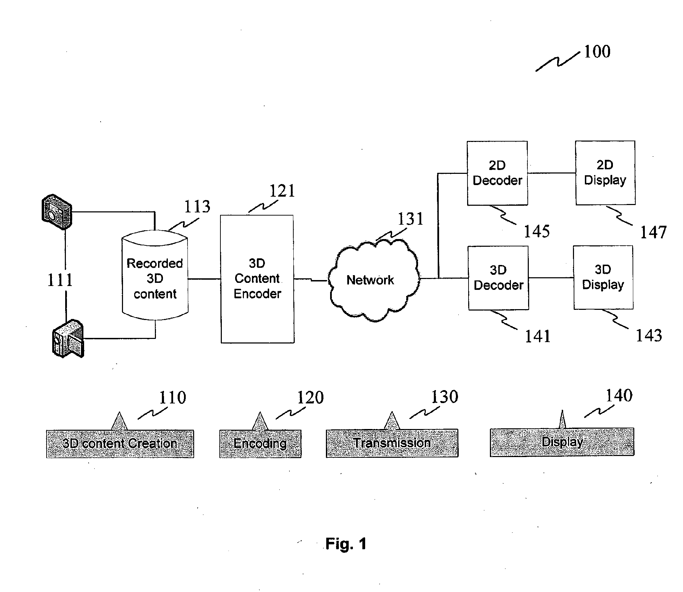

FIG. 1 shows a system according to an embodiment.

The system 100 includes a 3D content creation block 110, an encoding block 120, a transmission block 130 and a display block 140.

The 3D content creation block 110 may include one or more 3D content creator devices 111 and one or more 3D content storages 113. The one or more 3D content creator devices 111 may include a stereo camera, a Zcam™, a 3D camcorder, etc., e.g. any kind of image capturing device which is capable to capture 3D content. The 3D content created or captured by the 3D content creators 111 may include 3D images and videos, such as left-eye and right-eye images, left-eye and right-eye video streams, or may include 2D/monoscopic images or video together with corresponding depth information. The created 3D content may be recorded in one or more 3D content storages 113.

The Encoding block 120 may include one or more 3D content encoders 121 configured to encode the 3D content using one or more stereoscopic video coding techniques, such as anaglyph, quincunx, side by side (SbS), 2D+Metadata, 2D plus depth, MPEG-4 AVC (Advanced Video Coding), MVC (Multiview Video Coding), depending on the requirement of the transmission network, for example. In an example in which the encoded 3D content is to be transmitted via a DVB (Digital Video Broadcast) network, 2D video may be encoded using standard MPEG-2 tools and the associated depth information may be encoded using MPEG-4 Advanced Video Coding (AVC), in order to ensure backward-compatibility with existing 2D-TV set-top boxes.

In the transmission block 130, the encoded 3D content may be transmitted to end users through a network 131. The network 131 may be a television broadcasting network, e.g., a DVB network, for transmitting 3D TV programs to TV users. In another embodiment, the network 131 may be an IP (Internet Protocol) network for transmitting 3D image or video to PC users.

At the receiver side, the transmitted 3D content is decoded to retrieve the decoded 3D content. A 3D decoder 141, e.g. a 3D-TV set-top box, may be used to decode the encoded 3D content. A 3D display 143 may render the decompressed 3D content, in one example, by rendering stereo image pairs, and in another example, by depth-image-based rendering (DIBR) based on the decompressed 2D content and its associated depth information, and provide the 3D content to users. In another example, the 2D content may be extracted and decoded from the encoded 3D content by a 2D decoder 145, e.g. a conventional 2D-TV set-top box, and the decoded 2D content may be displayed on a 2D display 147 to provide 2D content to the users.

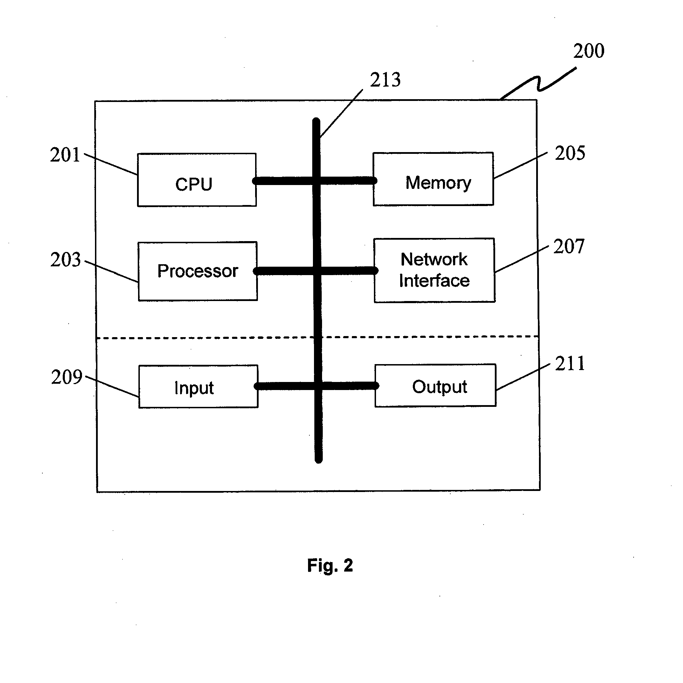

FIG. 2 shows a schematic diagram of an image processing device according to various embodiments.

The image processing device 200 may be implemented by a computer system. In various embodiments, the intensity disparity histogram determination circuit, the selection circuit, the first weighting factor determination circuit, the texture value determination circuit, the second weighting factor determination circuit and the amended disparity value determination circuit may also be implemented as modules executing on one or more computer systems. The computer system may include a CPU 201 (central processing unit), a processor 203, a memory 205, a network interface 207, input interface/devices 209 and output interface/devices 211. All the components 201, 203, 205, 207, 209, 211 of the computer system 200 are connected and communicating with each other through a computer bus 213.

The memory 205 may be used as for storing images, disparity values for the images, intensity disparity histogram, texture values, first and second weighting factors, and amended disparity values used and determined according to the method of the embodiments. The memory 205 may include more than one memory, such as RAM, ROM, EPROM, hard disk, etc. wherein some of the memories are used for storing data and programs and other memories are used as working memories.

In an embodiment, the memory 205 may be configured to store instructions for processing disparity values for image elements in a first image with respect to a second image according to various embodiments. The instructions, when executed by the CPU 201, may cause the CPU 201 to determine an intensity disparity histogram based on the first image and the second image, select a tuple of a frequency value and an associated disparity value, determine a first weighting factor dependent on the frequency value of the selected tuple, determine a texture value representing an intensity value variation over a neighboring region of the image element in the first image, determine a second weighting factor dependent on the texture value of the image element, and determine an amended disparity value for the image element dependent on the disparity value for the image element and the first weighting factor, the second weighting factor, and the disparity value of the selected tuple. The instruction may also cause the CPU 201 to store the intensity disparity histogram, the texture values, the first and the second weighting factors, and the amended disparity values determined according to the method of the embodiments in the memory 205.

In another embodiment, the processor 203 may be a special purpose processor, in this example, a image processor, for executing the instructions described above.

The CPU 201 or the processor 203 may be used as the image processing device as described in various embodiments below, and may be connected to an internal network (e.g. a local area network (LAN) or a wide area network (WAN) within an organization) and/or an external network (e.g. the Internet) through the network interface 207.

The Input 209 may include a keyboard, a mouse, etc. The output 211 may include a display for display the images processed in the embodiments below.

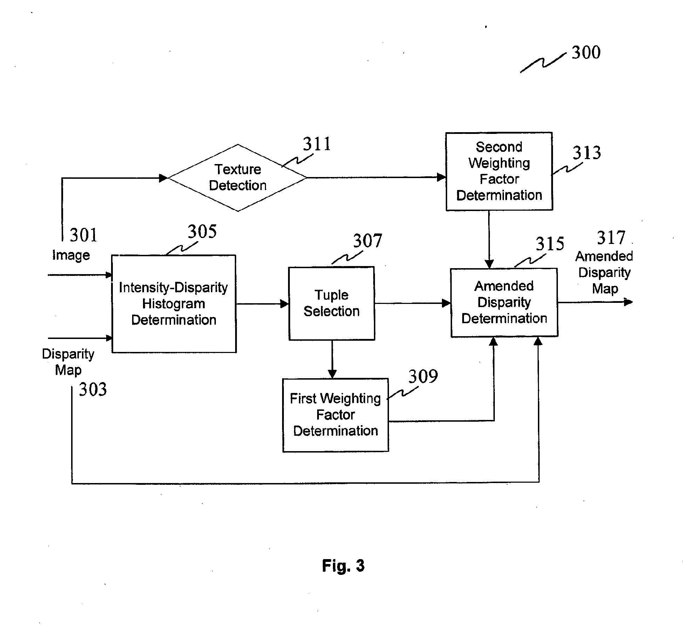

FIG. 3 shows a flow diagram according to various embodiments.

Based on the information provided in an image 301 and a disparity map 303, an intensity disparity histogram is determined at 305. The image 301 and disparity map 303 may be received via a network interface, or may be stored on a data storage.

The image 301 may include a first image corresponding to a left eye image and a second image corresponding to a right eye image, in which case the image 301 may be referred to as a stereo image pair. The image 301 may include intensity values for image elements in the image. It is understood that the image 301 may be a video including a sequence of image frames. For the purpose of simplicity, the method and device in this description is described with regard to images, but it is understood that the method and device of the embodiments may apply similarly to each image frame of the video.

The disparity map 303 may include disparity values for all image elements in the first image with respect to the second image. The disparity values in the disparity map 303 may be estimated or determined in accordance with existing disparity estimation algorithms based on stereoscopic correspondence, such as a blocking matching algorithm or a global energy minimization algorithm. For example, a correspondence search may be performed to find a second image element in the second image corresponding to a first image element in the first image using a matching block or window surrounding the image elements. The similarity between the image elements may be measured by a cost function calculated, e.g., based on sum of squared difference, sum of absolute difference or normalized correlation, etc.. The image element in the second image which gives the minimum value of the cost function indicates a best match with the first image element in the first image and may be determined to be the corresponding second image element. Accordingly, the disparity between these corresponding image elements may be estimated as the disparity for the first image element of the first image.

The image 301 and the disparity map 303 may include a plurality of intensity values and a plurality of disparity values. The determination of the intensity disparity histogram 305 includes, for each intensity value I and each disparity value d, determining the number of image elements having the same intensity value and the same disparity value. Each determined number of image elements represents a frequency value of the disparity value d for the intensity value I, which means the area or size of the region of the same intensity/color I (which may represent a un-textured region if the area is big enough) which has the same shift with respect to the corresponding regions in the second image. The intensity disparity histogram thus provides a global disparity distribution of each intensity value in the image, which may be used to relate similar intensity values to the same disparities independent of the spatial relations of the respective image element.

The intensity disparity histogram may be determined in accordance with the following equation:

$$Dhist(I,d) = \sum_{i=1}^{width} \sum_{j=1}^{height} \delta(I - I(i,j)).\delta(d - D(i,j))$$

$$I \in [0,255] \quad d \in [d_{min}, d_{max}]$$

(1)

wherein

$I$ represents an intensity value;
$d$ represents a disparity value;
$\delta$ represents a delta function;
$width$ represents the width of the image;
$height$ represents the height of the image; and
$Dhist(I,d)$ represents the frequency of the disparity d for the intensity value I.

In the above example, the intensity value I is in the range of [0, 255] when the intensity value is represented in 8-bit data. In other embodiments, the intensity value I may be in different range if the intensity value is represented using different number of bits. $[d_{min}, d_{max}]$ refers to the range of the disparity values.

The first image and the second image may be grayscale images in an embodiment. In another embodiment, the first image and the second image may be color images. The above embodiments described in relation to the intensity value is analogously valid for the RGB values of color images. Similarly, the color images may be represented using other color models, such as CMYK (cyan, magenta, yellow and key) and the various embodiments may be applied accordingly.

If the first image and the second image are color images, the intensity disparity histogram may be determined for each image element, wherein the intensity value of the image element is taken as the average of its R, G and B values. In another embodiment, a red color disparity histogram, a green color disparity histogram and a blue color disparity histogram may be determined respectively. The color disparity histograms may be determined in accordance with the following equations:

$$Dhist(R,d) = \sum_{i=1}^{width} \sum_{j=1}^{height} \delta(R - I^R(i,j)).\delta(d - Depth(i,j))$$

$$Dhist(G,d) = \sum_{i=1}^{width} \sum_{j=1}^{height} \delta(G - I^G(i,j)).\delta(d - Depth(i,j))$$

(2)

$$Dhist(B,d) = \sum_{i=1}^{width} \sum_{j=1}^{height} \delta(B - I^B(i,j)).\delta(d - Depth(i,j))$$

$$R,G,B \in [0,255] \quad d \in [d_{min}, d_{max}]$$

As seen from the above equations (2), for R, G and B channels three color disparity histograms are calculated. Hence, the global disparity distribution for each R, G and B value are obtained, which relates similar color values to same disparities independent of their spatial relations.

For an image element of the first image, a tuple of frequency value and associated disparity value may be selected at 307 using determined the intensity disparity histogram. In various embodiments, from the plurality of frequency values $Dhist(I,d)$ corresponding to the same intensity value $I_{(x,y)}$ of the image element in the first image, the maximum frequency value is selected and the disparity value associated with the maximum frequency value is selected accordingly. The selected maximum frequency value may illustratively represent the largest area or size of the regions in the first image, having the same intensity value $I_{(x,y)}$ with the image element and having the same disparity value, and may be referred to as the dominant frequency value in this context. In other words, the selected maximum frequency value indicates the existence ration of the corresponding intensity value in the first image, which is important to determine whether the corresponding intensity value belongs to an intensity-wise uniform and dominant surface/region or not. If the dominant frequency value is big enough, the area of the regions represented thereof may be a un-textured region having the dominant degree of shift with respect to the second image.

The selected disparity value associated with the maximum frequency value may be referred to as the dominant disparity value for the intensity value $I_{(x,y)}$ of the image element, which represents the dominant shift for the regions having the same intensity value $I_{(x,y)}$. By the selected tuple, the image element in the first image may be related to the regions of the same intensity value with the image element which have the dominant shift with respect to the corresponding regions in the second image. In other words, if the image element has the same intensity value with a un-textured region as determined by the dominant frequency value, the disparity value of the image element may be related to the dominant disparity of the un-textured region.

The frequency value and the associated disparity value may be determined in accordance with the following equation:

$$DDF(I_{(x,y)}) = \max(Dhist(I_{(x,y)},d))$$
$$DDC(I_{(x,y)}) = \max_d(Dhist(I_{(x,y)},d)) \tag{3}$$

wherein

DDF(I) represents the dominant frequency value of the selected tuple, and DDC(I) represents the dominant disparity value d of the selected tuple.

In another embodiment, selecting the tuple may include selecting a tuple for each color channel. For example, a first tuple is selected for the red color disparity histogram, a second tuple is selected for the green color disparity histogram, and a third tuple is selected for the blue color disparity histogram. The dominant disparity values of the respective tuple for each R, G, B value are determined by taking the disparity value with maximum frequency along the disparity axis. The frequency value and the associated disparity value for the color images may be determined in accordance with the following equation:

$$DDC(R) = \max_d(Dhist(R,d)) \quad DDF(R) = \max(Dhist(R,d))$$
$$DDC(G) = \max_d(Dhist(G,d)) \quad DDF(G) = \max(Dhist(G,d))$$
$$DDC(B) = \max_d(Dhist(B,d)) \quad DDF(B) = \max(Dhist(B,d)) \tag{4}$$

In the above equation (4), $DDC$ indicates the dominant disparity per color map corresponding to most frequent disparity value for each R, G and B value. The frequency of the dominant disparity indicates the existence ration of the corresponding color value, which may be stored as a DDF vector (dominant disparity frequency vector). The dominant frequency is used to determine whether the corresponding R, G or B value belongs to a color-wise uniform and dominant surface or not.

The first weighting factor may be determined using the frequency value of the selected tuple at 309. In an embodiment, the first weighting factor is determined in accordance with the following equation:

$$Global\_Weight_{I(x,y)} = \begin{cases} 1 & if & DDF(I_{(x,y)}) > F\_thres \\ DDF(I_{(x,y)})/F\_thres & elsewhere \end{cases} \qquad (5)$$

wherein

$Global\_Weight_{I(x,y)}$ represents the first weighting factor;

$I(x,y)$ represents the intensity value of the image element;

$DDF(I_{(x,y)})$ represents the frequency value of the selected tuple; and

$F\_thres$ represents the predetermined threshold.

In another embodiment, a respective weighting factor may be determined dependent on the respective frequency value of the first tuple, the second tuple and the third tuple, and the three weighting factors may be averaged, e.g. using a geometric mean or an arithmetic mean or any other suitable averaging method, to obtain the first weighting factor for the image element.

The respective weighting factor may be determined in accordance with the following equations:

$$Global\_Weight_R = \begin{cases} 1 & DDF(R) > F\_thres \\ DDF(R)/F\_thres & elsewhere \end{cases}$$

$$Global\_Weight_G = \begin{cases} 1 & DDF(G) > F\_thres \\ DDF(G)/F\_thres & elsewhere \end{cases} \qquad (6)$$

$$Global\_Weight_B = \begin{cases} 1 & DDF(B) > F\_thres \\ DDF(B)/F\_thres & elsewhere \end{cases}$$

The weight values determined for each color channel is unified, e.g. using geometric mean, to obtain a global weighting factor for the image element in accordance with the following equation:

$$Global\_Weight_{RGB} = \sqrt[3]{Global\_Weight_R . Global\_Weight_G . Global\_Weight_B} \qquad (7)$$

The predetermined threshold may be determined based on a percentage of the size of the first image. This threshold may be set by a content provider or a 3D imaging device provider, for example. An exemplary value for the threshold may be set as 10% of the input image/video resolution. Other exemplary threshold may be 5%, 6%, 7%, 8%, 9%, 11%, 12%, 13%, 14%, 15% or other suitable percentage of the image size.

The global weighting factor determined above may be in the range of [0-1]. For example, if the frequency value of the selected tuple is larger than the predetermined threshold, which means the image element may belong to a textureless or non-textured region with the same intensity value, the first weighting factor for the image element is determined to be high, e.g., to be 1. In other words, if the image element is belong to a un-textured region, a high weighting factor is assigned. On the hand, if the frequency value of the selected tuple is not larger than the predetermined threshold, which means the image element may belong to a textured region, the first weighting factor for the image element is determined to be lower than 1, e.g., to be proportional to the frequency value of the selected tuple.

In accordance with the above description, the dominant frequency value of the selected tuple is determined based on the intensity disparity histogram calculated using all image elements of the first image, the dominant frequency value and the first weighting factor determined thereupon may represent a global characteristic of the image element in the first image. Accordingly, the first weighting factor may also be referred to as a global weighting factor.

In the above global weighting factor determination, lower weighting factors are assigned for intensity values having low frequency, which may correspond to textured surface. Whereas higher weighting factors are assigned to intensity values having high frequency , which may corresponds to un-textured surface.

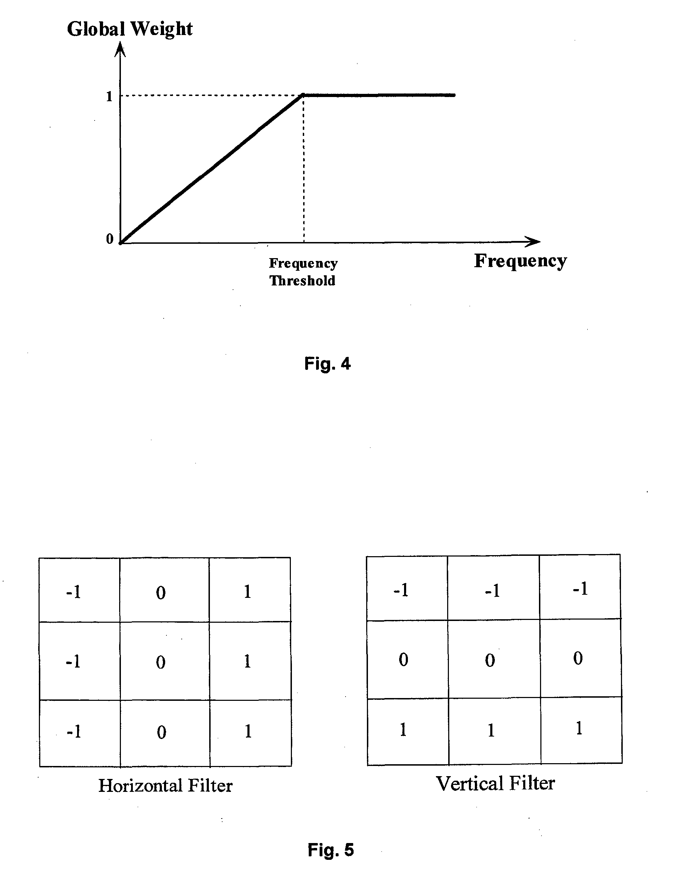

The equations (5), (6) above is a linear weighting function, which is shown in FIG. 4. However, it is understood that non-linear weighting function may also be used to determine the global weighting factor in other embodiments.

The intensity-disparity histogram determination 305, the tuple selection 307 and the first weighting factor determination 309 provide a global information depending on the global characteristics of the image 301.

In another aspect, the local characteristics of the image 301 may also be considered as described below.

A texture detection 311 is performed based on the image 301. Texture detection is used to classify uniform un-textured regions and textured regions. In order to detect uniform regions, an edge detection filter is applied to the image 301. In an embodiment, a horizontal filter and a vertical filter may be applied to the image element to detect the edge and color variation along horizontal and vertical directions, respectively, and therefore may be used to measure the texture quality of the image element.

The horizontal filter and the vertical filter may be a 2x2 filter, a 3x3 filter, ...or a N×N filter. The horizontal filter may determine the intensity value variance along a horizontal axis in the first image, and the vertical filter may determine the intensity variance along a vertical axis in the first image. The horizontal filter and the vertical filter together provide the information of the intensity value variance over a neighboring region of the image element in the first image. A higher intensity value variance may indicate that the image element is positioned in or near a textured region, while a lower intensity value variance may indicated that the image element is positioned in a un-textured region having uniform intensity values.

FIG. 5 shows an example of a 3x3 horizontal filter and a 3x3 vertical filter. The output of the respective filters may be determined in accordance with the following equations:

$$hor(x, y) = -I(x-1, y-1) - I(x-1, y) - I(x-1, y+1) \\ + I(x+1, y-1) + I(x+1, y) + I(x+1, y+1)$$

$$ver(x, y) = -I(x-1, y-1) - I(x, y-1) - I(x+1, y-1) \\ + I(x-1, y+1) + I(x, y+1) + I(x+1, y+1) \tag{8}$$

*Wherein*

*hor(x, y)* represents the horizontal filter;
*ver(x, y)* represents the vertical filter;
*I(x, y)* represents the intensity value of the image element at (x, y).

The intensity value $I(x, y)$ may be taken as the average of R, G, B values of the image element at (x, y).

The texture value of the image element may be determined by the geometric mean of the horizontal and vertical edge strength, for example, in accordance with the following equation:

$$Texture(x, y) = \sqrt{hor(x, y).ver(x, y)} \tag{9}$$

wherein *Texture*(x, y) represents the texture value of the image element at (x, y).

The texture value determined for the image element in accordance with the above embodiment is high when the intensity value variation along both horizontal and vertical axes is high. Illustratively, a higher texture value indicates that the image element is located in or near a textured region, and vice versa.

In accordance with the above description, the texture value is determined locally within a NxN window surrounding the image element, and therefore may represents a local characteristic of the image element.

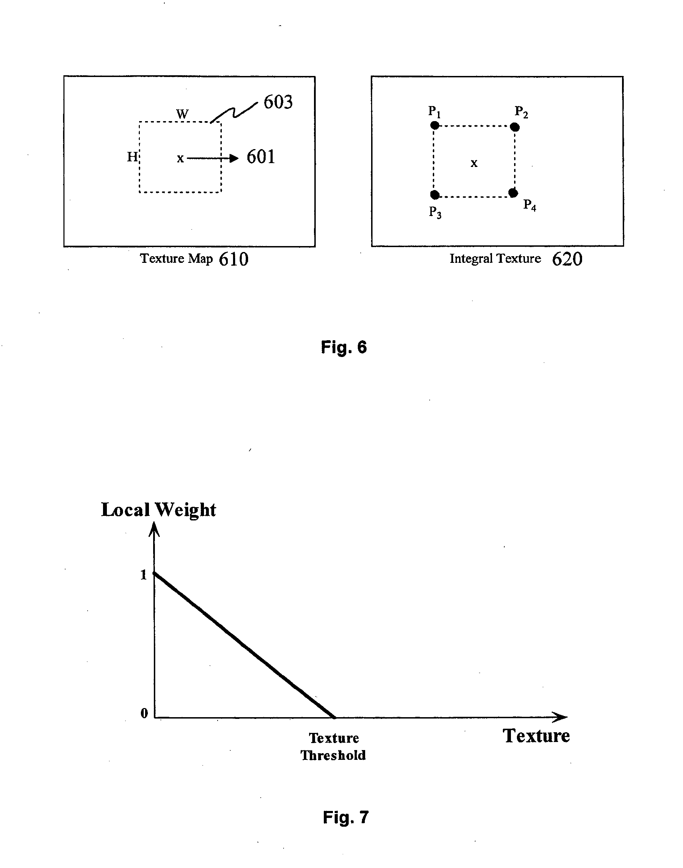

As illustrated in FIG. 6, the texture values determined in accordance with equation (9) for all image elements may form a texture map 610.

The texture value determined in the above embodiments may be smoothed using a filter, e.g. a box blur filter, a Gaussian smoothing filter, or a median filter, etc. in order to decrease the effect of noise.

In an illustrative example, a boxer filter is used for smoothing due to its higher efficiency. As shown in FIG. 6, the box filter provides averaging over a rectangular window 601 surrounding the image element x 601. An integral texture 620 of the texture value is first determined in accordance with equation (10) below. A mean value within an arbitrary window 601 (size of *WxH*) is then determined by carrying out arithmetic operations ($P_4$+$P_1$-$P_2$-$P_3$) on the four image elements P1, P2, P3, P4 at the four corners of the window 601 in accordance with equation (11) below, as also illustrated in FIG. 6. Since only three operations are required for each window size, the operation complexity is independent of the window size. The final texture value for the image element is obtained by the equation given in (11).

$$Int\_Tex(x,y) = \sum_{i=1}^{x}\sum_{j=1}^{y} Texture(i,j) \qquad (10)$$

$$Texture(x,y) = ((Int\_Tex(x-W/2,y-H/2) + Int\_Tex(x+W/2,y+H/2)$$
$$- Int\_Tex(x+W/2,y-H/2) - Int\_Tex(x-W/2,y+H/2))/W*H \quad (11)$$

In an embodiment, the above smoothes texture value may further be linearly scaled to the range of [0-255] for simplicity. The smoothing and scaling of the texture value may be carried out in the texture detection block 311.

Dependent on the texture value determined for the image element of the first image, a second weight factor is determined at 313. A sufficiently high texture value may indicate that the image element is located in or near a textured region. Since the disparity values estimated using existing methods are reliable at textured surfaces, no further processing may be needed at these regions and the second weighting factor may be determined to be 0. A low texture value may on the other hand indicate that the image element is located in a un-textured region, and the second weighting factor is determined to be high, e.g., to be inversely proportional to the texture value. An example of the texture value determined based on the predefined threshold is shown in FIG. 7.

In an embodiment, the second weighting factor may be determined in accordance with the following equation:

$$Local(x,y) = \begin{cases} 0 & if \quad Texture(x,y) > T\_thres \\ \dfrac{1}{Texture(x,y)+c} & elsewhere \end{cases} \qquad (12)$$

wherein

Local(x,y) represents the second weighting factor determined for the image element *(x,y)*;
Texture(x, y) represents the texture value;
c represents a constant close to 0; and
T_thres represents a predefined threshold.

In accordance with the above description, the texture value represents a local characteristic of the image element. Therefore, the second weighting factor determined thereupon may be referred to as a local weighting factor.

Having determined the first weighting factor and the second weighting factor, the amended disparity may be determined accordingly at 315. The selected tuple, the first weighting factor, the second weighting factor and the disparity map 303 are input to the amended disparity determination block 315.

In an embodiment, the amended disparity value is determined to converge to the disparity value of the selected tuple, if the first weighting factor and the second weighting factor are close to 1. Illustratively, the higher first weighting factor and second weighting factor indicate that the image element is in or near a un-textured region, and therefore the amended disparity value is determined to be or to be close to the disparity value of the selected tuple, such that the disparity value same as or similar to the dominant disparity value is assigned to image elements in or near the un-textured region.

In an embodiment, the amended disparity value is determined to be equal to or close to the disparity value of the image element, if either of the first weighting factor and the second weighting factor is equal to or close to 0. Illustratively, the lower first weighting factor or the second weighting factor may indicate that the image element is in or near a textured region, and therefore, the disparity value of the image element may be maintained.

The first weighting factor and the second weighting factor may be unified to obtain the overall weighting factor for the image element, which indicates the strength of disparity averaging. Higher averaging strength is provided for image element located in un-textured regions, whose disparity estimation may be unreliable. In an embodiment, the overall weighting factor may be determined in accordance with the following equation:

$$Weight(x,y) = Global\_Weight_{I(x,y)} * Local(x,y) \qquad (13)$$

According to the above equation, the first weighting factor determined from the global intensity disparity histogram distribution for the intensity value $I(x,y)$ (i.e. average of R, G, B values) and the local texture measure are both taken into account to acquire an overall weighting factor indicating the strength of averaging with the dominant disparity. The overall weighting factor favors un-textured regions having high frequency color distribution, and surpass textured regions with low frequency color distribution. Accordingly, the dominant un-textured regions in the images are focused.

The amended disparity value for the image element may be determined in accordance with the following equation:

$$D_{(x,y)}' = \left|1 - Weight_{(x,y)}\right| * D_{(x,y)} + Weight_{(x,y)} * DDC(I_{(x,y)}) \qquad (14)$$

wherein

$Global\_Weight_{I(x,y)}$ represents the first weighting factor;
$Local(x,y)$ represents the second weighting factor;
$I(x,y)$ represents the intensity value of the image element;
$DDC(I_{(x,y)})$ represents the associated disparity value of the selected tuple; and
$D_{(x,y)}$ represents the disparity value of the image element;
$D_{(x,y)}'$ represents the amended disparity value of the image element.

In an embodiment, $DDC(I_{(x,y)})$ is determined in accordance with the equation (3) above.

In another embodiment, $DDC(I_{(x,y)})$ is determined by taking an average of the dominant disparity value for respective R, G, B colors in accordance with the following equation

$$DDC(\frac{R+G+B}{3}) = \frac{DDC(R) + DDC(G) + DDC(B)}{3} \qquad (15)$$

In accordance with the above embodiment, for the image element having high overall weighting factor, the amended disparity value converge to the dominant disparity of the corresponding intensity value. Thus, un-textured regions with high frequency color distributions are assigned with the same disparity values which are dominant for that intensity value. On the other hand, the disparity values are preserved or maintained for the textured surfaces for which the overall weighting factor are small and close to 0. Thus, a content adaptive disparity map filtering is achieved, which preserves disparity distribution on reliable regions and amending the disparity distribution of unreliable un-textured regions.

The image element described in the embodiments above may be a pixel. In another embodiment, the image element may include a plurality of pixels, such as a block of picture elements or any object including a plurality of picture elements. The disparity value, the selected tuple, the first weighting factor, the texture value, the second weighting factor, and the amended disparity value may be determined for each pixel or each block of pixels accordingly. The intensity disparity histogram may be determined for each pixel in the first image or the second image. The intensity disparity histogram may also be determined for each block of pixels, wherein the intensity value of each block of pixels may be taken as an average intensity value of the block.

The amended disparity values for all image elements in the first image may form an amended disparity map 317, which is used, e.g. by an image render, together with the image 301 to provide 3D image/video for display.

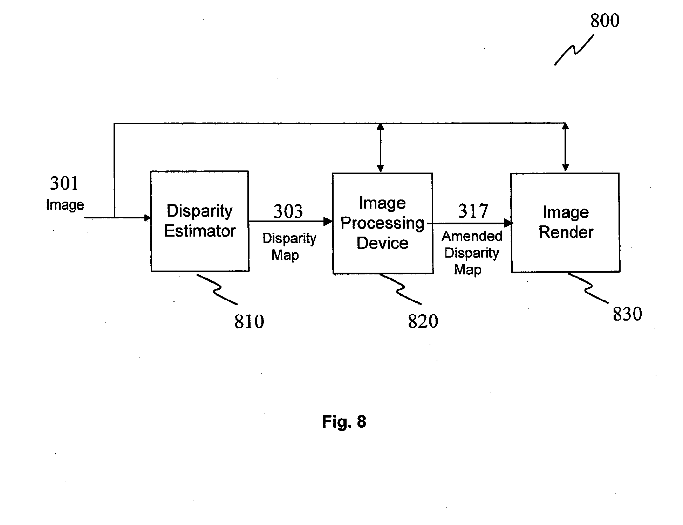

FIG. 8 shows an imaging system according to an embodiment.

The imaging system 800 receive an image 301, which may be a stereo image pair or a stereo video as described in FIG. 3 above.

The imaging system 800 includes a disparity estimator 810 for estimating a disparity value for each image element in a first image with respect to a second image. The disparity estimator 810 may generate a disparity map 303 in accordance with various methods described with regard to the disparity map 303 above.

The imaging system 800 includes an image processing device 820 for amending the disparity map 317 to determine the amended disparity map 317. The image processing device 820 may carry out the image processing in accordance with the method described in FIG. 3 above.

An image render 830 may receive the image 301 and the amended disparity map 317 and render the image 301 for 3D display.

The imaging system 800 may be embodied in a 3D TV or a computer, for example.

The method and device of various embodiment provide an amendment to error-prone disparity maps by analyzing both local and global characteristics of the images. An intensity-disparity histogram is calculated to determine the existence frequency of each intensity value and their most encountered disparity values. A global weighting factor may be determined based on the existence frequency, such that higher weightage is given to intensity values with higher frequency. The texture characteristics is determined to classify the textured regions and un-textured regions. Based on the texture characteristics, a local weighting factor is determined such that high local weighting factor is assigned to textured regions and low local weighting factor is assigned to un-textured regions. The global weighting factor and the local weighting factor are combined to obtain an overall weighting factor, which is high only for un-textured surfaces having frequent color distribution. The amended disparity map is achieved by a weighted average of the initial disparity map and the dominant disparity values per intensity value, through the overall weighting factor determined by local and global analysis. Thus, a content based disparity map filtering is achieved by assigning dominant disparity values for un-textured high frequency colored regions and unchanging the remaining type of regions.

**Claims**

1. A method for processing a disparity value for an image element in a first image with respect to a second image, the method comprising:

    determining an intensity disparity histogram, which includes, for each intensity value of a plurality of intensity values and each disparity value of a plurality of disparity values, a frequency value indicating the number of image elements having the respective intensity value and the same disparity value;
    selecting a tuple of a frequency value and an associated disparity value, for which the frequency value fulfils a predefined criterion;
    determining a first weighting factor dependent on the frequency value of the selected tuple;
    determining a texture value for the image element, the texture value representing an intensity value variation over a neighboring region of the image element in the first image;
    determining a second weighting factor dependent on the texture value of the image element; and
    determining an amended disparity value for the image element dependent on the disparity value for the image element and the first weighting factor, the second weighting factor, and the disparity value of the selected tuple.

2. The method of claim 1, wherein
   selecting the tuple of the frequency value and the associated disparity value comprises:

    selecting the maximum frequency value from the plurality of frequency values determined for an intensity value of the image element in the first image, and
    selecting the disparity value associated with the maximum frequency value.

3. The method of claim 1 or 2, wherein
   the first weighting factor is determined in accordance with the following equation:

$$Global\_Weight_{I(x,y)} = \begin{cases} 1 & if \quad DDF(I_{(x,y)}) > F\_thres \\ DDF(I_{(x,y)})\,/\,F\_thres & elsewhere \end{cases}$$

wherein

Global_Weight$_{I(x,y)}$ represents the first weighting factor;
I(x,y) represents the intensity value of the image element;
DDF(I$_{(x,y)}$) represents the frequency value of the selected tuple; and
F_thres represents the predetermined threshold.

4. The method of claim 3, wherein
the predetermined threshold is determined based on a percentage of the size of the first image.

5. The method of any one of claims 1 to 4, wherein
determining the texture value for the image element comprises applying a horizontal filter and a vertical filter to the image element in accordance with the following equation:

$$Texture(x, y) = \sqrt{hor(x, y).ver(x, y)}$$

wherein

$$hor(x, y) = -I(x-1, y-1) - I(x-1, y) - I(x-1, y+1) \\ + I(x+1, y-1) + I(x+1, y) + I(x+1, y+1)$$

$$ver(x, y) = -I(x-1, y-1) - I(x, y-1) - I(x+1, y-1) \\ + I(x-1, y+1) + I(x, y+1) + I(x+1, y+1)$$

wherein

Texture(x, y) represents the texture value;
hor(x, y) represents the horizontal filter;
ver(x, y) represents the vertical filter;
I(x, y) represents the intensity value of the image element at (x, y).

6. The method of any one of claims 1 to 5, further comprising smoothing the determined texture value using a filter.

7. The method of any one of claims 1 to 6,
wherein the second weighting factor is determined in accordance with the following equation:

$$Local(x, y) = \begin{cases} 0 & if \quad Texture(x, y) > T\_thres \\ \dfrac{1}{Texture(x, y) + c} & elsewhere \end{cases}$$

wherein

Local(x,y) represents the second weighting factor determined for the image element (x,y);
Texture(x, y) represents the texture value;
c represents a constant close to 0; and
T_thres represents a predefined threshold.

**8.** The method of any one of claims 1 to 7, wherein
the amended disparity value is determined to converge to the disparity value of the selected tuple, if the first weighting factor and the second weighting factor are close to 1.

**9.** The method of any one of claims 1 to 8, wherein
the amended disparity value is determined to be equal to or close to the disparity value of the image element, if either of the first weighting factor and the second weighting factor is equal to or close to 0.

**10.** The method of any one of claims 1 to 9, wherein
the amended disparity value for the image element is determined in accordance with the following equation:

$$D_{(x,y)}' = \left| 1 - Weight_{(x,y)} \right| * D_{(x,y)} + Weight_{(x,y)} * DDC(I_{(x,y)})$$

wherein

$$Weight(x, y) = Global\_Weight_{I(x,y)} * Local(x, y)$$

wherein

$Global\_Weight_{I(x,y)}$ represents the first weighting factor;
$Local(x,y)$ represents the second weighting factor;
$I(x,y)$ represents the intensity value of the image element;
$DDC(I_{(x,y)})$ represents the associated disparity value of the selected tuple; and
$D_{(x,y)}$ represents the disparity value of the image element;
$D_{(x,y)}'$ represents the amended disparity value of the image element.

**11.** The method of any one of claims 1 to 10,
wherein the image element comprises a picture element or a block of picture elements.

**12.** The method of any one of claims 1 to 11,
wherein determining the intensity disparity histogram comprises determining a red color disparity histogram, a green color disparity histogram and a blue color disparity histogram.

**13.** The method of claim 12, wherein selecting the tuple of a frequency value and an associated disparity value comprises selecting a first tuple for the red color disparity histogram, a second tuple for the green color disparity histogram and a third tuple for the blue color disparity histogram.

**14.** An image processing device for processing a disparity value for an image element in a first image with respect to a second image, the device comprising:

an intensity disparity histogram determination circuit configured to determine, for each intensity value of a plurality of intensity values and each disparity value of a plurality of disparity values, a frequency value indicating the number of image elements having the respective intensity value and the same disparity value;
a selection circuit configured to select a tuple of a frequency value and an associated disparity value, for which the frequency value fulfils a predefined criterion;
a first weighting factor determination circuit configured to determine a first weighting factor dependent on the frequency value of the selected tuple;
a texture value determination circuit configured to determine a texture value for the image element, the texture value representing an intensity value variation over a neighboring region of the image element in the first image;
a second weighting factor determination circuit configured to determine a second weighting factor dependent on the texture value of the image element; and
an amended disparity value determination circuit configured to determine an amended disparity value for the image element dependent on the disparity value for the image element and the first weighting factor, the second weighting factor,
and the disparity value of the selected tuple.

15. An imaging system, comprising:

a disparity estimator for estimating a disparity value for each image element in a first image with respect to a second image;
an image processing device for amending the disparity value for each image element in accordance with claim 14; and
an image render for rendering the first image and the second image dependent on the amended disparity values.


**Patentansprüche**

1. Verfahren zum Verarbeiten eines Disparitätswerts für ein Bildelement in einem ersten Bild betreffend ein zweites Bild, das Verfahren aufweisend:

Ermitteln eines Intensität-Disparität-Histogramms, das für jeden Intensitätswert einer Mehrzahl von Intensitätswerten und jeden Disparitätswert einer Mehrzahl von Disparitätswerten einen Frequenzwert aufweist, der die Anzahl der Bildelemente anzeigt, die den entsprechenden Intensitätswert und denselben Disparitätswert haben;
Auswählen eines Tupels eines Frequenzwerts und eines assoziierten Disparitätswerts, für den der Frequenzwert ein vordefiniertes Kriterium erfüllt;
Ermitteln eines ersten Gewichtungsfaktors abhängig von dem Frequenzwert des ausgewählten Tupels;
Ermitteln eines Texturwerts für das Bildelement, wobei der Texturwert eine Intensitätswert-Variation über eine benachbarte Region des Bildelements in dem ersten Bild darstellt;
Ermitteln eines zweiten Gewichtungsfaktors abhängig von dem Texturwert des Bildelements; und
Ermitteln eines verbesserten Disparitätswerts für das Bildelement abhängig von dem Disparitätswert für das Bildelement und dem ersten Gewichtungsfaktor, dem zweiten Gewichtungsfaktor und dem Disparitätswert des ausgewählten Tupels.

2. Das Verfahren gemäß Anspruch 1,
wobei das Auswählen des Tupels des Frequenzwerts und des assoziierten Disparitätswerts aufweist:

Auswählen des maximalen Frequenzwerts aus der Mehrzahl der Frequenzwerte, die für einen Intensitätswert des Bildelements in dem ersten Bild ermittelt werden, und
Auswählen des Disparitätswerts, der mit dem maximalen Frequenzwert assoziiert ist.

3. Das Verfahren gemäß Anspruch 1 der 2,
wobei der erste Gewichtungsfaktor entsprechend der folgenden Gleichung ermittelt wird:

$$Global\_Weight_{I(x,y)} = \begin{cases} 1 & wenn \quad DDF(I_{(x,y)}) > F\_thres \\ DDF(I_{(x,y)}) \, / \, F\_thres & sonst \end{cases}$$

wobei

$Global\_Weight_{I(x,y)}$ *den* ersten Gewichtungsfaktor darstellt;
$I(x,y)$ den Intensitätswert des Bildelements darstellt;
$DDF(I_{(x,y)})$ den Frequenzwert des ausgewählten Tupels darstellt; und
$F\_thres$ den vorbestimmten Schwellenwert darstellt.

4. Das Verfahren gemäß Anspruch 3,
wobei der vorbestimmte Schwellenwert basierend auf einem Verhältnis der Größe des ersten Bildes ermittelt wird.

5. Das Verfahren gemäß einem der Ansprüche 1 bis 4,
wobei das Ermitteln des Texturwerts für das Bildelement ein Anwenden eines horizontalen Filters und eines vertikalen Filters auf das Bildelement entsprechend der folgenden Gleichung aufweist:

$$Texture(x, y) = \sqrt{hor(x, y).ver(x, y)}$$

wobei

$$hor(x, y) = -I(x-1, y-1) - I(x-1, y) - I(x-1, y+1) \\ + I(x+1, y-1) + I(x+1, y) + I(x+1, y+1)$$

$$ver(x, y) = -I(x-1, y-1) - I(x, y-1) - I(x+1, y-1) \\ + I(x-1, y+1) + I(x, y+1) + I(x+1, y+1)$$

wobei

*Texture(x, y)* den Texturwert darstellt;
*hor(x, y)* den horizontalen Filter darstellt;
*ver(x, y)* den vertikalen Filter darstellt;
*I(x, y)* den Intensitätswert des Bildelements bei (x, y) darstellt.

**6.** Das Verfahren gemäß einem der Ansprüche 1 bis 5, ferner aufweisend
Glätten des ermittelten Texturwerts unter Verwendung eines Filters.

**7.** Das Verfahren gemäß einem der Ansprüche 1 bis 6,
wobei der zweite Gewichtungsfaktor entsprechend der folgenden Gleichung ermittelt wird:

$$Local(x, y) = \begin{cases} 0 & wenn \quad Texture(x, y) > T\_thres \\ \dfrac{1}{Texture(x, y) + c} & sonst \end{cases}$$

wobei

*Local(x,y)* den zweiten Gewichtungsfaktor darstellt, der für das Bildelement *(x,y)* ermittelt wird;
*Texture(x, y)* den Texturwert darstellt;
*c* eine Konstante nahe bei 0 darstellt; und
*T_thres* einen vordefinierten Schwellenwert darstellt.

**8.** Das Verfahren gemäß einem der Ansprüche 1 bis 7, wobei der verbesserte Disparitätswert so ermittelt wird, dass er zu dem Disparitätswert des ausgewählten Tupels konvergiert, wenn der erste Gewichtungsfaktor und der zweite Gewichtungsfaktor nahe bei 1 sind.

**9.** Das Verfahren gemäß einem der Ansprüche 1 bis 8, wobei der verbesserte Disparitätswert so ermittelt wird, dass er gleich zu oder nahe bei dem Disparitätswert des Bildelements ist, wenn einer von dem ersten Gewichtungsfaktor und dem zweiten Gewichtungsfaktor gleich oder nahe bei 0 ist.

**10.** Das Verfahren gemäß einem der Ansprüche 1 bis 9, wobei der verbesserte Disparitätswert für das Bildelement entsprechend der folgenden Gleichung ermittelt wird:

$$D_{(x,y)}' = \left| 1 - Weight_{(x,y)} \right| * D_{(x,y)} + Weight_{(x,y)} * DDC(I_{(x,y)})$$

wobei

$$Weight(x, y) = Global\_Weight_{I(x,y)} * Local(x, y)$$

wobei

$Global\_Weight_{I(x,y)}$ den ersten Gewichtungsfaktor darstellt;
$Local(x,y)$ den zweiten Gewichtungsfaktor darstellt;
$I(x,y)$ den Intensitätswert des Bildelements darstellt;
$DDC(I_{(x,y)})$ den assoziierten Disparitätswert des ausgewählten Tupels darstellt; und
$D_{(x,y)}$ den Disparitätswert des Bildelements darstellt;
$D_{(x,y)}'$ den verbesserten Disparitätswert des Bildelements darstellt.

11. Das Verfahren gemäß einem der Ansprüche 1 bis 10, wobei das Bildelement ein Bildelement oder einen Block von Bildelementen aufweist.

12. Das Verfahren gemäß einem der Ansprüche 1 bis 11, wobei das Ermitteln des Intensität-Disparität-Histogramms ein Ermitteln eines Disparitätshistogramms der roten Farbe, eines Disparitätshistogramms der grünen Farbe und eines Disparitätshistogramms der blauen Farbe aufweist.

13. Das Verfahren gemäß Anspruch 12,
wobei das Auswählen des Tupels eines Frequenzwerts und eines assoziierten Disparitätswerts ein Auswählen eines ersten Tupels für das Disparitätshistogramm der roten Farbe, eines zweiten Tupels für das Disparitätshistogramm der grünen Farbe und eines dritten Tupels für das Disparitätshistogramm der blauen Farbe aufweist.

14. Bildverarbeitungsvorrichtung zum Verarbeiten eines Disparitätswerts für ein Bildelement in einem ersten Bild betreffend ein zweites Bild, das Verfahren aufweisend:

einen Intensität-Disparität-Histogramm-Ermittlungsschaltkreis, eingerichtet, zum Ermitteln, für jeden Intensitätswert einer Mehrzahl von Intensitätswerten und jeden Disparitätswert einer Mehrzahl von Disparitätswerten, eines Frequenzwerts, der die Anzahl der Bildelemente anzeigt, die den entsprechenden Intensitätswert und denselben Disparitätswert haben;
einen Auswahlschaltkreis, eingerichtet zum Auswählen eines Tupels eines Frequenzwerts und eines assoziierten Disparitätswerts, für den der Frequenzwert ein vordefiniertes Kriterium erfüllt;
einen Ersten-Gewichtungsfaktor-Ermittlungsschaltkreis, eingerichtet zum Ermitteln eines ersten Gewichtungsfaktors abhängig von dem Frequenzwert des ausgewählten Tupels;
einen Texturwert-Ermittlungsschaltkreis, eingerichtet zum Ermitteln eines Texturwerts für das Bildelement, wobei der Texturwert eine Intensitätswert-Variation über eine benachbarte Region des Bildelements in dem ersten Bild darstellt;
einen Zweiten-Gewichtungsfaktor-Ermittlungsschaltkreis, eingerichtet zum Ermitteln eines zweiten Gewichtungsfaktors abhängig von dem Texturwert des Bildelements; und
einen Verbesserten-Disparitätswert-Ermittlungsschaltkreis, eingerichtet zum Ermitteln eines verbesserten Disparitätswerts für das Bildelement abhängig von dem Disparitätswert für das Bildelement und dem ersten Gewichtungsfaktor, dem zweiten Gewichtungsfaktor und dem Disparitätswert des ausgewählten Tupels.

15. Bildverarbeitungssystem aufweisend
einen Disparitätsschätzer zum Schätzen eines Disparitätswerts für jedes Bildelement in einem ersten Bild betreffend ein zweites Bild;
eine Bildverarbeitungsvorrichtung zum Verbessern des Disparitätswerts für jedes Bildelement gemäß Anspruch 14; und
einen Bildrenderer zum Rendern des ersten Bildes und des zweiten Bildes abhängig von den verbesserten Disparitätswerten.

**Revendications**

**1.** Procédé de traitement d'une valeur de disparité pour un élément d'image dans une première image par rapport à une seconde image, le procédé consistant à :

déterminer un histogramme de disparité d'intensités, qui inclut, pour chaque valeur d'intensité d'une pluralité de valeurs d'intensité et pour chaque valeur de disparité d'une pluralité de valeurs de disparité, une valeur de fréquence indiquant le nombre d'éléments d'image présentant la valeur d'intensité respective et la même valeur de disparité ;
sélectionner un uplet d'une valeur de fréquence et d'une valeur de disparité associée, pour lequel la valeur de fréquence satisfait un critère prédéfini ;
déterminer un premier facteur de pondération en fonction de la valeur de fréquence de l'uplet sélectionné ;
déterminer une valeur de texture pour l'élément d'image, la valeur de texture représentant une variation de valeur d'intensité sur une zone voisine de l'élément d'image dans la première image ;
déterminer un second facteur de pondération en fonction de la valeur de texture de l'élément d'image ; et déterminer une valeur de disparité modifiée pour l'élément d'image en fonction de la valeur de disparité pour l'élément d'image et du premier facteur de pondération,
du second facteur de pondération, et de la valeur de disparité de l'uplet sélectionné.

**2.** Procédé selon la revendication 1, dans lequel :

la sélection de l'uplet de la valeur de fréquence et de la valeur de disparité associée, consiste à :

sélectionner la valeur de fréquence maximale à partir de la pluralité de valeurs de fréquence déterminée pour une valeur d'intensité de l'élément d'image dans la première image, et sélectionner la valeur de disparité associée à la valeur de fréquence maximale.

**3.** Procédé selon la revendication 1 ou 2, dans lequel :

le premier facteur de pondération est déterminé selon l'équation suivante :

$$Global\_Weight_{I(x,\,y)} = \begin{cases} 1 & si\ DDF(I(x,y)) > F\_thres \\ DDF(I\{x,y) \ / \ F\_thres & ailleurs \end{cases}$$

où

Global_WeightI(x y) représente le premier facteur de pondération ;
$I(x,y)$ représente la valeur d'intensité de l'élément d'image ;
$DDF(I_{(x,y)})$ représente la valeur de fréquence de l'uplet sélectionné ; et
$F\_thres$ représente le seuil prédéterminé.

**4.** Procédé selon la revendication 3, dans lequel :

le seuil prédéterminé est déterminé sur la base d'un pourcentage de la taille de la première image.

**5.** Procédé selon l'une quelconque des revendications 1 à 4, dans lequel :

la détermination de la valeur de texture pour l'élément d'image consiste à appliquer un filtre horizontal et un filtre vertical à l'élément d'image selon l'équation suivante :

$$Texture(x, y) = \sqrt{hor(x, y).ver(x, y)}$$

où

$$hor(x, y) = - I(x - 1, y - 1) - I(x - 1, y) - I(x - 1, y + 1)$$
$$+ I(x + 1, y - 1) + I(x + 1, y) + I(x + 1, y + 1)$$

$$ver(x, y) = - I(x - 1, y - 1) - I(x, y - 1) - I(x + 1, y - 1)$$
$$+ I(x - 1, y + 1) + I(x, y + 1) + I(x + 1, y + 1)$$

où

Texture(x, y) représente la valeur de texture ;
hor(x, y) représente le filtre horizontal ;
ver(x, y) représente le filtre vertical ;
I(x, y) représente la valeur d'intensité de l'élément d'image aux coordonnées (x, y).

6. Procédé selon l'une quelconque des revendications 1 à 5, consistant en outre à :

lisser la valeur de texture déterminée en utilisant un filtre.

7. Procédé selon l'une quelconque des revendications 1 à 6, dans lequel le second facteur de pondération est déterminé selon l'équation suivante :

$$Local(x,y) = \begin{cases} 0 & si\ Texture(x,y) > T\_thres \\ \dfrac{1}{Texture(x,y) + c} & ailleurs \end{cases}$$

où

Local(x, y) représente le second facteur de pondération déterminé pour l'élément d'image (x, y) ;
Texture(x, y) représente la valeur de texture ;
c représente une constante proche de 0 ; et
T_thres représente un seuil prédéfini.

8. Procédé selon l'une quelconque des revendications 1 à 7, dans lequel :

la valeur de disparité modifiée est déterminée de manière à converger vers la valeur de disparité de l'uplet sélectionné, si le premier facteur de pondération et le second facteur de pondération sont proches de 1.

9. Procédé selon l'une quelconque des revendications 1 à 8, dans lequel :

la valeur de disparité modifiée est déterminée comme étant égale à ou proche de la valeur de disparité de l'élément d'image, si l'un quelconque du premier facteur de pondération et du second facteur de pondération est égal à ou proche de 0.

10. Procédé selon l'une quelconque des revendications 1 à 9, dans lequel :

la valeur de disparité modifiée pour l'élément d'image est déterminée selon l'équation suivante :

$$D_{(x,y)}' = |\, 1 - Weight_{(x,y)}\,| * D_{(x,y)} + Weight_{(x,y)} * DDC(I_{(x,y)})$$

où

$$Weight(x, y) = Global\_Weight_{I(x,y)} * Local(x, y)$$

où

$Global\_Weight_{I(x,y)}$ représente le premier facteur de pondération ;
$Local(x, y)$ représente le second facteur de pondération ;
$I(x, y)$ représente la valeur d'intensité de l'élément d'image ;
$DDC(I_{(x,y)})$ représente la valeur de disparité associée de l'uplet sélectionné ; et
$D_{(x,y)}$ représente la valeur de disparité de l'élément d'image ;
$D_{(x,y)}'$ représente la valeur de disparité modifiée de l'élément d'image.

11. Procédé selon l'une quelconque des revendications 1 à 10, dans lequel l'élément d'image comprend un pixel ou un bloc de pixels.

12. Procédé selon l'une quelconque des revendications 1 à 11, dans lequel la détermination de l'histogramme de disparité d'intensités consiste à déterminer un histogramme de disparité de couleur rouge, un histogramme de disparité de couleur verte et un histogramme de disparité de couleur bleue.

13. Procédé selon la revendication 12, dans lequel la sélection de l'uplet d'une valeur de fréquence et d'une valeur de disparité associée consiste à sélectionner un premier uplet pour l'histogramme de disparité de couleur rouge, un deuxième uplet pour l'histogramme de disparité de couleur verte et un troisième uplet pour l'histogramme de disparité de couleur bleue.

14. Dispositif de traitement d'image destiné à traiter une valeur de disparité pour un élément d'image dans une première image par rapport à une seconde image, le dispositif comportant :

un circuit de détermination d'histogramme de disparité d'intensités configuré de manière à déterminer, pour chaque valeur d'intensité d'une pluralité de valeurs d'intensité et chaque valeur de disparité d'une pluralité de valeurs de disparité, une valeur de fréquence indiquant le nombre d'éléments d'image présentant la valeur d'intensité respective et la même valeur de disparité ;
un circuit de sélection configuré de manière à sélectionner un uplet d'une valeur de fréquence et d'une valeur de disparité associée, pour lequel la valeur de fréquence satisfait un critère prédéfini ;
un premier circuit de détermination de facteur de pondération configuré de manière à déterminer un premier facteur de pondération en fonction de la valeur de fréquence de l'uplet sélectionné ;
un circuit de détermination de valeur de texture configuré de manière à déterminer une valeur de texture pour l'élément d'image, la valeur de texture représentant une variation de valeur d'intensité sur une zone voisine de l'élément d'image dans la première image ;
un second circuit de détermination de facteur de pondération configuré de manière à déterminer un second facteur de pondération en fonction de la valeur de texture de l'élément d'image ; et
un circuit de détermination de valeur de disparité modifiée configuré de manière à déterminer une valeur de disparité modifiée pour l'élément d'image en fonction de la valeur de disparité pour l'élément d'image et du premier facteur de pondération,
du second facteur de pondération, et de la valeur de disparité de l'uplet sélectionné.

15. Système d'imagerie, comprenant :

un estimateur de disparité destiné à estimer une valeur de disparité pour chaque élément d'image dans une première image par rapport à une seconde image ;

un dispositif de traitement d'image destiné à modifier la valeur de disparité pour chaque élément d'image selon la revendication 14 ; et

un restituteur d'image destiné à restituer la première image et la seconde image en fonction des valeurs de disparité modifiées.

100

2D
Decoder

2D
Display

113

121

131

145

147

111

Recorded
3D
content

3D
Content
Encoder

Network

3D
Decoder

3D
Display

141

143

110

120

130

140

3D content Creation

Encoding

Transmission

Display

**Fig. 1**

**Fig. 2**

~ 300

311

Second
Weighting
Factor
Determination
313

Texture
Detection

301
Image

305

Intensity-Disparity
Histogram
Determination

307

Tuple
Selection

315

Amended
Disparity
Determination

317
Amended
Disparity
Map

Disparity
Map

303

309

First Weighting
Factor
Determination

**Fig. 3**

**Global Weight**

**Fig. 4**

Horizontal Filter

Vertical Filter

**Fig. 5**

W

603

H

x ——► 601

P₁         P₂

x

P₃         P₄

Texture Map 610

Integral Texture 620

**Fig. 6**

**Local Weight**

1

0

Texture
Threshold

**Texture**

**Fig. 7**

800

301
Image

| Disparity Estimator | 303 Disparity Map | Image Processing Device | 317 Amended Disparity Map | Image Render |

810                    820                                830

**Fig. 8**

**EP 2 557 537 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2293586 A1
- EP 1968329 A2